# EUROPEAN PATENT APPLICATION

(11) **EP 4 385 755 A1**
(43) Date of publication of application: **19.06.2024**
(21) Application number: 23215786.7
(22) Date of filing: 12.12.2023
(51) Int. Cl.: B60C 1/00, C08L 7/00

(54) **SUSTAINABLE TIRE PRODUCED WITH HIGH RECYCLED/RENEWABLE RAW MATERIAL CONTENT**

(30) Priority: 16.12.2022 US 202218067048
(71) Applicant: The Goodyear Tire & Rubber Company, Akron, OH 44316 (US)
(72) Inventor: KRUTH, Alexis Anne, Cuyahoga Falls, 44223 (US); DEAN-SIOSS, Stacey Lynne, Broadview Heights, 44147 (US); CHE, Justin Yinket, Akron, 44312 (US); DENNIS-PELCHER, Robert Vincent, Uniontown, 44685 (US); BALDAN, Adam Mark, Akron, 44303 (US); TILL, Douglas Andrew, Akron, 44313 (US); ZIELINSKI, Bartosz, L-7347 Steinsel (LU); KUO-CHIH, Hua, Richfield, 44286 (US); BUTTI, Bryce, Avon, 44011 (US); GOLDEN, James Joseph, North Canton, 44720 (US)
(74) Representative: Kutsch, Bernd

(57) **Abstract**

A sustainable tire (10) is disclosed that is formed from greater than 85% content made from processes or technologies that reduce carbon emissions and/or resource consumption, and/or that is formed from greater than 85% content from recycled, renewable, bio-based, bio-derived, or mass balance raw materials.

## Description

### Field of the Invention

The present exemplary embodiments relate to a vehicle tire containing a majority weight percent of raw materials made from processes or technologies that reduce carbon emissions and/or resource consumption, and/or recycled, renewable, bio-based, bio-derived and mass balanced raw materials. It finds particular application in conjunction with pneumatic consumer tires and will be described with particular reference thereto. However, it is to be appreciated that the present exemplary embodiments are also amenable to other like applications.

### Background of the Invention

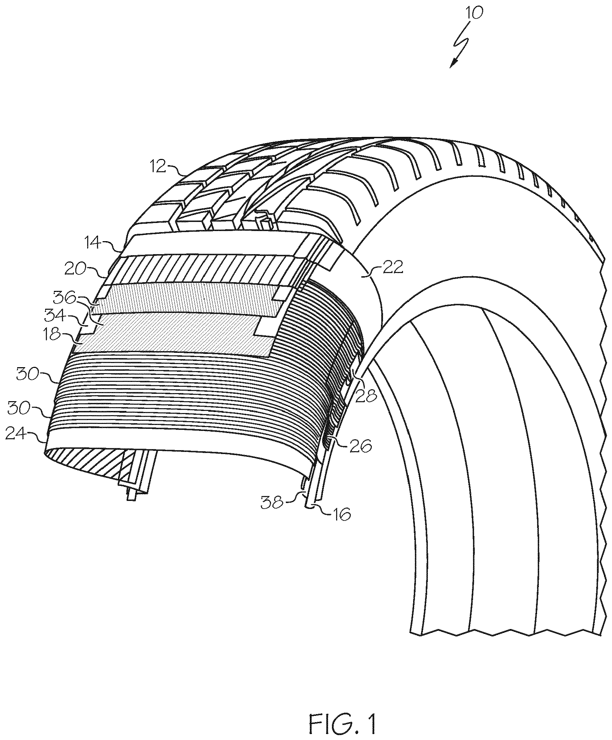

FIG. 1 is a schematic cross-section of a tire 10. Tire treads are typically of a cap/base construction, with the tread cap 12 designed to be ground-contacting and thus contain a lug/groove ground-contacting configuration, and with the tread base 14 underlying and supporting the tread cap and positioned between the tread cap and the tire carcass. Generally, the tread cap 12 and tread base 14 are a co-extruded component of the tire. The tread may be formed of one or more compounds.

The pneumatic tire 10 further comprises a generally toroidal-shaped carcass, two spaced beads 16 (steel beads coated with bead coat, not shown), at least one ply (comprising a belt 18, carcass, overlay 20 or breaker plies) extending from bead to bead, sidewalls 22 extending radially from and connecting said tread to said beads, an inner liner 24 that covers the inner surface of said pneumatic tire, and an optional barrier layer which is located between the inner liner and the ply. Radially outward from the bead wires are annular stiffeners/apexes 26, which extend between the optional barrier layer and the inner liner 24. Chafers 28, which provide support for the bead wires 16, are located axially outward from the apexes 26 where the ply layer 30 (i.e., a polyester fabric coated with plycoat) turns up about the bead wires 16. Gum strips 34 cover the ends of the ply 30. The belt and carcass plies are made up of wires coated with a rubber composition (hereinafter "wire coat" 36). Toeguards 38 seal the tire from air and pressure. Indeed, tires can be manufactured from as many as twenty (20) various rubber compositions each used in a different part of the tire.

There is an ongoing effort to develop sustainable solutions across all industries, including the tire and rubber industries. However, a sustainable tire must deliver a competitive performance before it can replace a well-performing predecessor. It is discovered herein that a pneumatic tire formed from greater than 85% and, more particularly, 90% by weight sustainable content can provide improved or comparable performance to existing tires in the market. While conventional ingredients and/or tire parts are known, the sustainable combination disclosed herein has not been used before.

### Summary of the Invention

The invention relates to a tire in accordance with claims 1 or 5 respectively.

Dependent claims refer to preferred embodiments of the invention.

One embodiment of the disclosure is directed to a sustainable tire formed from greater than 85%, and, more preferably, 90%, content from processes or technologies that reduce carbon emissions and/or resource consumption, and/or recycled, renewable, bio-based, bio-derived, and mass balanced raw materials relative to less than 20% in a conventional tire. In other words, the disclosed tire comprises over four times (4x) the percentage of sustainable content as compared to current tires. It is further discovered that such sustainable tire meets and/or exceeds the performance of the current consumer tire.

In one embodiment, the tire contains reinforcements characterized by greater than or equal to 65 percent by weight sustainable content. In one embodiment, the reinforcements are polyamide. Polyamide as a reinforcement material makes 1.0% weight (lbs) per tire. By replacing conventional reinforcements with bio-derived polyamide 4.10 in a sustainable tire, the bio-derived polyamide 4.10 provides greater than 0.6% of the overall renewable content in a tire relative to a conventional tire absent polyamide. Alternatively, or complimenting the polyamide, recycled materials such as recycled polyester and/or recycled steel can be used.

In one embodiment, the tire comprises a liner characterized by greater than 35 percent by weight sustainable content as compared to a conventional liner at 0.5 %. The liner makes from 5.0% to 6.0% weight (lbs) per tire. By replacing a conventional liner with the disclosed liner in a sustainable tire, the liner provides greater than 2.0% of the overall renewable content in the tire relative to less than 0.05% in a conventional tire.

In one embodiment, the tire comprises a belt wire characterized by greater than 85 percent by weight sustainable content as compared to a conventional belt wire at a minimum of 0%, depending on supplier. The belt wire makes from 6.0% to 7.0% weight (lbs) per tire. By replacing a conventional belt wire with the disclosed belt wire in a sustainable tire, the belt wire provides greater than 5.0% of the overall renewable content in the tire relative to less than 0.75% in a conventional tire.

In one embodiment, the tire comprises bead wire characterized by greater than 85 percent by weight sustainable content as compared to a conventional bead wire at a minimum of 0%, depending on supplier. The bead wire makes from 5.0% to 6.0% weight (lbs) per tire. By replacing a conventional bead wire with the disclosed bead wire in a sustainable tire, the bead wire provides greater than 4.5% of the overall renewable content in the tire relative to less than or equal to 0.50% in a conventional tire.

In one embodiment, the tire comprises gum strip characterized by greater than 89 percent by weight sustainable content as compared to a conventional gum strip at 27.5%. The gum strip makes from 1.0% to 2.0% weight (lbs) per tire. By replacing a conventional gum strip with the disclosed gum strip in a sustainable tire, the gum strip provides greater than 1.0% of the overall renewable content in the tire relative to less than 0.40% in a conventional tire.

In one embodiment, the tire comprises a wire coat characterized by greater than 90 percent by weight sustainable content as compared to a conventional wire coat at 29 %. The wire coat makes from 6.0% to 7.0% weight (lbs) per tire. By replacing a conventional wire coat with the disclosed wire coat in a sustainable tire, the wire coat provides greater than 5.5% of the overall renewable content in the tire relative to less than 2.0% in a conventional tire.

In one embodiment, the tire comprises an apex characterized by greater than 90 percent by weight sustainable content as compared to a conventional apex at 0.9%. The apex makes from 2.0% to 3.0% weight (lbs) per tire. By replacing a conventional apex with the disclosed apex in a sustainable tire, the apex provides greater than 2.0% of the overall renewable content in the tire relative to less than 0.02% in a conventional tire.

In one embodiment, the tire comprises a bead coat characterized by greater than 91 percent by weight sustainable content as compared to a conventional bead coat at 1.6%. The bead coat makes from 0.1% to 0.5% weight (lbs) per tire. By replacing a conventional bead coat with the disclosed bead coat in a sustainable tire, the bead coat provides greater than 0.3% of the overall renewable content in the tire relative to none in a conventional tire.

In one embodiment, the tire comprises a base characterized by greater than 93 percent by weight sustainable content as compared to a conventional base at 41.3%. The base makes from 4.0% to 5.0% weight (lbs) per tire. By replacing a conventional base with the disclosed base in a sustainable tire, the base provides greater than 4.0% of the overall renewable content in the tire relative to less than 2.0% in a conventional tire.

In one embodiment, the tire comprises a plycoat characterized by greater than 93 percent by weight sustainable content as compared to a conventional plycoat at 51.1%. The plycoat makes from 11.0% to 12.0% weight (lbs) per tire. By replacing a conventional plycoat with the disclosed plycoat in a sustainable tire, the plycoat provides greater than 10.0% of the overall renewable content in the tire relative to less than 8.0% in a conventional tire.

In one embodiment, the tire comprises a tread characterized by greater than 93 percent by weight sustainable content as compared to a conventional tread at 2.5%. The tread makes from 30.0% to 31.0% weight (lbs) per tire. By replacing a conventional tread with the disclosed tread in a sustainable tire, the tread provides greater than 28.0% of the overall renewable content in the tire relative to less than 0.75% in a conventional tire.

In one embodiment, the tire comprises a sidewall characterized by greater than 94 percent by weight sustainable content as compared to a conventional sidewall at 20.2%. The sidewall makes from 9.0% to 10.0% weight (lbs) per tire. By replacing a conventional sidewall with the disclosed sidewall in a sustainable tire, the sidewall provides greater than 9.0% of the overall renewable content in the tire relative to less than 3.0% in a conventional tire.

In one embodiment, the tire comprises an overlay characterized by greater than 94 percent by weight sustainable content as compared to a conventional overlay at 49.6%. The overlay makes up 2% weight (lbs) per tire. By replacing a conventional overlay with the disclosed overlay in a sustainable tire, the overlay provides greater than 1.75% of the overall renewable content in the tire relative to less than 1.25% in a conventional tire.

In one embodiment, the tire comprises a toeguard characterized by greater than 95 percent by weight sustainable content as compared to a conventional to guard at 0.5%. The toeguard makes from 3.0% to 4% weight (lbs) per tire. By replacing a conventional toeguard with the disclosed toeguard in a sustainable tire, the toeguard provides greater than or equal to 3.0% of the overall renewable content in the tire relative to less than or equal to 0.02% in a conventional tire.

In one embodiment, the tire comprises a chafer characterized by greater than 95 percent by weight sustainable content as compared to a conventional chafer at 0.5%. The chafer makes from 3.0% to 4.0% weight (lbs) per tire. By replacing a conventional chafer with the disclosed chafer in a sustainable tire, the chafer provides greater than 3.25% of the overall renewable content in the tire relative to less than or equal to 0.02% in a conventional tire.

In one embodiment, the tire comprises a PET characterized by greater than 97 percent by weight sustainable content as compared to a conventional PET at 0%. The PET makes from 4.0% to 5.0% weight (lbs) per tire. By replacing a conventional PET with the disclosed PET in a sustainable tire, the PET provides greater than or equal to 4.0% of the overall renewable content in the tire relative to none in a conventional tire.

In one embodiment, each of the above parts are employed in the same tire. Non-limiting example raw sustainable materials incorporated in the sustainable tire comprise, among others, natural rubbers or mass-balanced diene-based polymers; fatty acids; bio-based resins such as terpene and/or rosin-based resins like rosin oil or rosin acid; bio-based coupling agents and/or systems such as bio-based silanes; vegetable triglyceride oil; fillers such as carbon black derived from bio-based or recycled feedstocks and/or rice husk ash silica; recycled materials such as zinc oxide, steel and/or polyester; and lignin-based antiozonant or antioxidant.

### Description of the Drawings

The invention will be described by way of example and with reference to the accompanying drawings in which:
FIGURE 1 is a schematic cross-section diagram of a tire.
FIGURE 2 is a table showing a summary of the combination of compounds outlined in examples 1 through 10 to form a tire with competitive performance.
FIGURE 3 reports the results for the tire of FIGURE 2.

### Detailed Description of Preferred Embodiments of the Invention

The present disclosure relates to a vehicle tire containing a majority weight percent of sustainable content. The disclosure further relates to reinforcements and rubber compounds and, more particularly, to a combination of such, incorporated in the tire. In rubber tire compounds, each material and additive are combined with elastomers to impart specific properties in the resulting rubber. There is a desire to reduce, or altogether exclude, from tires the parts and/or materials that originate from nonrenewable sources. Disclosed herein is a tire being formed from a majority content of sustainable material and parts and that replicates or exceeds the performance of a conventional tire.

As used herein, the term "sustainable material" means or encompasses raw materials made from processes or technologies that reduce carbon emissions and/or resource consumption, and/or recycled, renewable, bio-based, bio-derived and mass balanced raw materials.

As used herein, the term "bio-based" or "bio-derived" refers to a circular material or a material derived from a renewable or sustainable resource or natural source, and may even include an industrial source when, for example, a byproduct or waste product is being captured and reused (recycled) to reduce or eliminate emissions and/or landfill waste that is harmful to the environment. One example is the sequestration of carbon oxides for use as feedstock.

It partially, and more preferably fully, excludes radiocarbon and fossil carbon materials derived from petroleum, coal, or a natural gas source. Examples of resources from which the bio-based material can be derived include, but are not limited to, fresh (or from the fermentation) of biomass material, such as corn and vegetable oils.

As used herein "mass balanced" means that at least a portion of the feedstock used to synthesize a material, such as a rubber polymer, resin or filler, is circular or bio-based. In practice, the production of carbon black or polymers can be certified as using mass-balanced principles. Carbon black can be synthesized using a percentage of circular tire pyrolysis oil (TPO) and traditional petroleum-based feedstock. Likewise, in the contemplated embodiment, at least 0.1%, and more preferably at least 1%, and most preferably at least 5%, of the feedstock to produce the polymer is circular or bio-based. In other words, a contemplated polymer or filler is produced from a mass balance of bio-based feedstock and traditional feedstock. One non-limiting example of a bio-based feedstock includes tall oil but may also include biomass, byproduct and waste products discussed supra. The term "mass-balanced" may also refer to carbon black and other byproducts obtained from the pyrolysis of scrap tires. A mass-balanced material is typically certified to the International Sustainability & Carbon Certification (ISCC) standard.

As used herein, the terms "compounded rubber", "rubber compound" and "compound" refer to rubber compositions containing elastomers which have been compounded, or blended, with appropriate rubber compounding ingredients. The terms "rubber" and "elastomer" and "polymer" may be used interchangeably unless otherwise indicated. It is believed that such terms are well known to those having skill in the art.

As used herein, except where context requires otherwise, the term "comprise" and variations of the term, such as "comprising", "comprises" and "comprised", are not intended to exclude further additives, components, integers, or steps. As used herein, the words "from about" means approximately and can includes values ±1 beyond the ones listed herein.

An important aspect of the disclosure is the percent weight content of sustainable content in the tire achieved using a combination of various renewable, bio-based, bio-derived, recycled, and/or mass balanced materials, and/or materials made from processes or technologies that reduce carbon emissions and/or resource consumption.

It is envisioned that the rubber compositions for these, inter alia, tire components may be formed from a combination of materials that create a final tire having between 50 weight percent (wt%) to 100 wt% sustainable content. In the contemplated embodiment, a combination of tire components is assembled to form greater than 50 wt% sustainable tire. The rubber compositions of individual tire components may each be independently formed from 0.01 to 100 wt% sustainable content but assembled in a tire to achieve a sustainable tire having at least 50 weight percent (wt%) and, more preferably, at least 60 wt% and, most preferably, at least 80 wt% of sustainable content measured relative to 100 wt% of a tire. In the working samples shown infra, one embodiment of the invention is a tire that achieves at least 88 wt% of sustainable content measured relative to 100 wt% of a tire.

Example materials that can be employed in the tire components can include, without limiting said materials to those disclosed below, natural rubber and synthetic polymers; fillers; plasticizers; vulcanizers; accelerators; and other additives.

### Polymers:

Rubber compositions used to form and/or coat the tire tread and/or parts may comprise at least one conjugated diene-based elastomer. In practice, various conjugated diene-based elastomers may be used for a rubber composition such as, for example, polymers and copolymers of at least one of isoprene and 1,3-butadiene and of styrene copolymerized with at least one of isoprene and 1,3-butadiene. Representative of such conjugated diene-based elastomers are, for example, at least one of cis 1,4-polyisoprene (natural and synthetic), cis 1,4-polybutadiene, styrene/butadiene copolymers (SBR), polybutadiene having a vinyl 1,2-content in a range of 15 to 90 percent, isoprene/butadiene copolymers, and styrene/isoprene/butadiene terpolymers.

In practice, the preferred rubber or elastomers are natural rubber, synthetic polyisoprene, polybutadiene and/or SBR. The synthetic rubber elastomers are preferably ISCC certified polymers. Examples of mass balanced elastomers can include SBR and polybutadiene in which circular or renewable feedstock are employed to synthesize the polymers. Non-limiting examples of polymers that can be employed in the disclosed tire can include any ISCC polymer, such as ISCC SBRs available as BUNA^{™} SB 1502 or SPRINTAN^{™} SLR 4602 by Synthos Group; and ISCC polybutadienes under the marks BUD 1208 or BUD 4001 by LG. In practice, at least two or more different mass balanced polymers may be used.

Preferably, a natural rubber or synthetic polyisoprene can be employed in the composition as the predominant polymer. Cis 1,4-polyisoprene natural rubber is well known to those having skill in the rubber art, although a Cis 1,4-polyisoprene synthetic can be used. However, as used herein, the term "natural rubber" refers to a latex derived from any natural source including Hevea (or rubber) trees and non-Hevea plants, such as, for example, guayule shrubs, dandelions, and sunflowers.

In some embodiments, only one polymer is used. Although, a blend of multiple polymers is contemplated.

In a contemplated embodiment, at least one rubber polymer is a styrene-butadiene rubber. Styrene/butadiene copolymers include those prepared by aqueous emulsion polymerization (ESBR) or organic solvent solution polymerization (SSBR). In the contemplated embodiment, an ESBR is contemplated, which typically has a bound styrene content in a range of 9 to 36 percent. However, embodiments are contemplated in which the ESBR has a bound styrene content of less than 30 percent.

An SSBR can also be employed in the rubber composition. SSBR can be non-functionalized or functionalized. Representative of functionalized elastomers are, for example, styrene/butadiene elastomers containing one or more functional groups comprising:
(A) amine functional group reactive with hydroxyl groups on precipitated silica,
(B) siloxy functional group, including end chain siloxy groups, reactive with hydroxyl groups on precipitated silica,
(C) combination of amine and siloxy functional groups reactive with hydroxyl groups on said precipitated silica,
(D) combination of thiol and siloxy (e.g. ethoxysilane) functional groups reactive with hydroxyl groups on the precipitated silica,
(E) combination of imine and siloxy functional groups reactive with hydroxyl groups on the precipitated silica,
(F) hydroxyl functional groups reactive with the precipitated silica.

In practice, a second rubber polymer can include polybutadiene. In one embodiment, the rubber composition comprises from 1 phr to 50 phr of at least one polybutadiene and, more preferably, from 20 phr to 40 phr of polybutadiene(s). In practice, it is envisioned that the cis 1,4-polybutadiene elastomer(s) may be a prepared cis 1,4-polybutadiene rubber which may be prepared, for example, by polymerization of 1,3-butadiene monomer in an organic solvent solution in the presence of a catalyst system comprising a nickel compound. However, such 1,4-polybutadiene(s) can be prepared by organic solution lanthanide catalysis of cis 1,3-budadiene rubber instead.

It is further contemplated that, in certain embodiments, a secondary polymer may be a butyl type rubber, particularly copolymers of isobutylene with a minor content of diene hydrocarbon(s), such as, for example, isoprene and halogenated butyl rubber.

It is further contemplated that, in certain embodiments, a secondary polymer may comprise a halobutyl rubber comprising a blend consisting of chlorobutyl rubber, bromobutyl rubber and mixtures thereof.

### Oil

By desiring the rubber composition to contain fewer to no materials derived from petroleum, it is meant that the rubber composition will contain minimal, if any, petroleum-based plasticizers, including processing oil. For example, it is desired that the rubber composition be limited to less than 8 phr of petroleum-based processing oil and, more preferably, less than 2 phr of rubber petroleum-based processing oil. In some embodiments, it is contemplated that all compounds in a tire exclude petroleum-based oil.

In one embodiment, the rubber composition may comprise up to 50 phr of a bio-based rubber processing oil. In another embodiment, the rubber composition may comprise no less than a majority of bio-based oil among a combination of oils.

Processing oil may be included in the rubber composition as extending oil typically used to extend elastomers. Processing oil may also be included in the rubber composition by addition of the oil directly during rubber compounding. The processing oil used in the rubber composition may include both extending oil present in the elastomers and process oil added during compounding. A suitable bio-based oil is a vegetable triglyceride oil comprising a combination of saturated and unsaturated esters where the unsaturated esters comprise a combination of at least one of oleic acid ester, linoleate acid ester and linoleate acid ester. The saturated esters may comprise, for example, at least one of stearic acid ester and palmitic acid ester.

In one embodiment, the vegetable triglyceride oil comprises at least one of soybean oil, sunflower oil, rapeseed oil, and canola oil, which are in the form of esters containing a certain degree of unsaturation. Other suitable examples of vegetable triglyceride oil include corn, coconut, cottonseed, olive, palm, peanut, and safflower oils. In practice, the oil includes at least one of soybean oil and sunflower oil.

In the case of soybean oil, for example, the above represented percent distribution, or combination, of the fatty acids for the glycerol tri-esters, namely the triglycerides, is represented as being an average value and may vary somewhat depending primarily on the type, or source of the soybean crop, and may also depend on the growing conditions of a particular soybean crop from which the soybean oil was obtained. There are also significant amounts of other saturated fatty acids typically present, though these usually do not exceed 20 percent of the soybean oil.

### Resin

In certain rubber compositions, a plasticizing, traction, tackifying and/or reinforcing resin is desired. Common resins are derived from petroleum. These types of resins include any hydrocarbon chemistry type resin (AMS, coumarone-indene, C5, C9, C5/C9, DCPD, DCPD/C9, others) & any modification thereof (phenol, C9, hydrogenation, recycled monomers, others). While these types of resins may be used in some compositions of the invention, the preferred embodiment instead employs a renewable biobased chemistry type resin and/or modification and mixture thereof. Examples of bio-based resins include terpene and rosin-based resins, such as rosin oil resin or gum resin.

Representative resins can also include coumarone type resins, including coumarone-indene resins and mixtures of coumarone resins, naphthenic oils, phenol resins, and rosins. Other suitable resins include phenol-terpene resins such as phenol-acetylene resins, phenol-formaldehyde resins, alkyl phenol-formaldehyde resins, terpene-phenol resins, polyterpene resins, and xylene-formaldehyde resins.

Terpene-phenol resins may be used. Terpene-phenol resins may be derived by copolymerization of phenolic monomers with terpenes such as limonenes, pinenes and delta-3-carene. In one embodiment, the resin can be an alpha pinene resin characterized by a softening point between 70° C and 160° C.

In one embodiment, the resin is a resin derived from rosin and derivatives. Representative thereof are, for example, gum rosin (also referred to as rosin acid), wood rosin and tall oil rosin. Gum rosin, wood rosin and tall oil rosin have similar compositions, although the number of components of the rosins may vary. Such resins may be dimerized, polymerized or disproportionated. Such resins may be in the form of esters of rosin acids and polyols such as pentaerythritol or glycol. In one embodiment, the resin can be a gum rosin characterized by a softening point between 70° C and 160° C.

In one embodiment, said resin may be partially or fully hydrogenated.

In one embodiment, the rubber composition can optionally comprise resin in up to 50 phr.

### Filler

Rubber compositions typically comprise a filler material with common fillers including silica and/or carbon black. Common carbon black is derived from a petroleum feedstock. The tire of the invention uses rubber compositions formed using carbon black from a bio-based or recycled feedstock.

The ASTM-D6866 method to derive "bio-based" content is built on the same concepts as radiocarbon dating, but without use of the age equations. The method relies on determining a ratio of the amount of radiocarbon (¹⁴C) in an unknown sample to that of a modern reference standard. The ratio is reported as a percentage with the units "pMC" (percent modern carbon). If the material being analyzed is a mixture of present-day radiocarbon and fossil carbon (fossil carbon being derived from petroleum, coal or a natural gas source), then the obtained pMC value correlates directly to the amount of biomass material present in the sample.

The modern reference standard used in radiocarbon dating is a National Institute of Standards and Technology USA (NIST-USA) standard with a known radiocarbon content equivalent approximately to the year AD 1950, before excess radiocarbon was introduced into the atmosphere. AD 1950 represents zero (0) years old and 100 pMC. Present day (fresh) biomass materials, and materials derived therefrom, give a radiocarbon signature near 107.5.

The radiocarbon dating isotope (¹⁴C) has a nuclear half-life of 5730 years. Fossil carbon, depending upon its source, has very close to zero ¹⁴C content. By presuming that 107.5 pMC represents present day biomass materials and 0 pMC represents petroleum (fossil carbon) derivatives, the measured pMC value for a material will reflect the proportions of the two component types. Thus, a material derived 100% from present day vegetable oil would give a radiocarbon signature near 107.5 pMC. If that material was diluted with 50% petroleum derivatives, it would give a radiocarbon signature near 54 pMC.

A biomass content result is derived by assigning 100% equal to 107.5 pMC and 0% equal to 0 pMC. In this regard, a sample measuring 99 pMC will give an equivalent bio-based content result of 93%. This value is referred to as the "mean biobased result" and assumes all the components within the analyzed material were either present day living or fossil in origin.

The results provided by the ASTM D6866 method are the mean biobased result and encompass an absolute range of 6% (±3% on either side of the mean bio-based result) to account for variations in end-component radiocarbon signatures. It is presumed that all materials are present day or fossil in origin. The result is the amount of bio-based component "present" in the material-not the amount of bio-based material "used" in the manufacturing process.

In one embodiment, a tire component is formed from a rubber composition comprising a mass balanced or ISCC carbon black, such as a carbon black at least partially derived from a non-traditional feedstock, such as tall oil, methane, or end-of-life tire pyrolysis oil.

In one embodiment, a tire component is formed from a rubber composition comprising a carbon black filler having a greater than one percent (1%) modern carbon content as defined by ASTM D6866. The carbon black is produced from a bio-based feedstock prior to its addition to the rubber composition. In one embodiment, the carbon black is at least partially derived from a bio-based feedstock and, in a preferred embodiment, is completely devoid of fossil carbon.

In one embodiment, the bio-based or bio-recycled feedstock, from which the carbon black is derived, comprises at least one triglyceride vegetable oil, such as, for example, soybean oil, sunflower oil, canola oil, rapeseed oil, or combinations thereof. In one embodiment, the bio-based feedstock, from which the carbon black is derived, comprises at least one plant biomass, animal biomass and municipal waste biomass, or combinations thereof. In other words, the bio-based feedstock can be produced from a byproduct, such as methane, from the biomasses. Accordingly, carbon black that is formed from methane pyrolysis is characterized as bio-derived feedstock herein.

In one embodiment, the carbon black has at least 1% modern carbon content. In one embodiment, the carbon black has at least 10% and, more preferably, at least 25% and, most preferably, at least 50% modern carbon content. In one embodiment, the carbon black has a biomass content result of at least 1 pMC and, more preferably, at least 54 pMC. In one embodiment, the carbon black may have a biomass content result of at least 80 pMC.

Examples of sustainable carbon black may include those produced by bio-oil, bio-diesel, and biologically derived hydrocarbons.

Generally, the bio-based carbon blacks are designed to meet the properties of the select grade of conventional carbon black.

Various combinations of carbon blacks (of differing particle sizes and/or other properties, including conventional, petroleum-carbon black) can also be employed in the disclosed rubber composition. Representative examples of rubber reinforcing carbon blacks are, for example, and not intended to be limiting, referenced in The Vanderbilt Rubber Handbook, 13^{th} edition, 1990, on Pages 417 and 418 with their ASTM designations. Such rubber reinforcing carbon blacks may have iodine absorptions ranging from, for example, 60 to 240 g/kg and DBP values ranging from 34 to 150 cc/100 g.

In one embodiment, the rubber composition comprises, based on 100 parts by weight (phr) of elastomer, from 1 to 125 phr of carbon black. In one embodiment, the rubber composition comprises no more than 125 phr of carbon black. In another embodiment, the rubber composition comprises no less than 1 phr of carbon black and, in certain embodiments, no less than 25 phr of carbon black.

Other embodiments are contemplated that employ a carbon-dioxide generated carbon reinforcing filler. Suitable carbon dioxide-generated carbon reinforcement may be produced using methods as described in US 8,679,444; US 10,500,582; and U.S. Ser. No. 17/109,262-the contents of which are each incorporated in their entirety herein.

Other embodiments are contemplated in which the carbon black is used in combination with another filler, such as silica.

In one embodiment, the precipitated silica comprises:
(A) a precipitated silica derived from inorganic sand (silicon dioxide-based sand), or
(B) a precipitated silica derived from rice husks (silicon dioxide containing rice husks), or
(C) a combination of both.

In one embodiment the precipitated silica is derived from naturally occurring inorganic sand (e.g. SiO₂, silicon dioxide, which may contain a trace mineral content). The inorganic sand is typically treated with a strong base such as, for example, sodium hydroxide, to form an aqueous silicate solution (e.g. sodium silicate). A synthetic precipitated silica is formed therefrom by controlled treatment of the silicate with an acid (e.g. a mineral acid and/or acidifying gas such as, for example, carbon dioxide). Sometimes an electrolyte (e.g. sodium sulfate) may be present to promote formation of precipitated silica particles. The recovered precipitated silica is an amorphous precipitated silica.

In a preferred embodiment, the silica is a rice husk derived silica. Such precipitated silica is from derived rice plant husks (e.g. burnt ashes from rice husks) which contain SiO₂, silicon dioxide, and which may contain trace minerals from the soil in which the rice has been planted). In a similar methodology, the rice husks (e.g. rice husk ash) is typically treated with a strong base such as, for example, sodium hydroxide, to form an aqueous silicate solution (e.g. sodium silicate) following which a synthetic precipitated silica is formed therefrom by controlled treatment of the silicate with an acid (e.g. a mineral acid and/or acidifying gas such as, for example, carbon dioxide) in which an electrolyte (e.g. sodium sulfate) may be present to promote formation of precipitated silica particles derived from rice husks. The recovered precipitated silica is an amorphous precipitated silica. For Example, see U.S. Patent Application Serial No. 2003/0096900. In practice, the rubber composition comprises between 25 and 100 weight percent of rice husk ash silica and, more preferably, between 50 and 80 weight percent of rice husk ash silica.

The precipitated silica, whether derived from the aforesaid silicon dioxide or rice husks, may, for example, have a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037.

For embodiments in which the filler comprises both carbon black and silica, the carbon black may be present at a majority content level and the silica may be present at the minority content level. However, the reverse is contemplated for some tire components, such as a tread.

### Coupling Agent

Representative of silica coupler for use with the silica are:
(A) bis(3-trialkoxysilylalkyl) polysulfide containing an average in range of from 2 to 4, alternatively from 2 to 2.6 or from 3.2 to 3.8, sulfur atoms in its connecting bridge, or
(B) an alkoxyorganomercaptosilane, or
(C) their combination.

Representative of such bis(3-trialkoxysilylalkyl) polysulfide comprise bis(3-triethoxysilylpropyl) polysulfide.

The silica, discussed supra, is desirably added to the rubber composition in combination with the bis(3-triethoxysilylpropyl) polysulfide for reaction thereof in situ within the rubber composition.

In one embodiment, the composition comprises silane coupling agent at a level commensurate with the amount of silica filler.

In a preferred embodiment, the coupling agent is a bio-based coupling agent or a bio-based silane coupling agent. One non-limiting example bio-based coupling agent is bis(triethoxysilylpropyl)polysulfide (TESPT).

### Processing Aid-Fatty Acid/Derivatives

Another aspect of the present disclosure is the optional addition of a bio-derived processing aid for the rubber composition in some embodiments. Generally, from 0.5 to 5 phr and, more preferably, from 1 to 3 phr of processing aid may be comprised in the composition. In a preferred embodiment, the processing aid can be a bio-based fatty acid, for example, stearic acid or tall oil fatty acid (TOFA), such as SYLFAT line of TOFAs from Kraton^{®} or others.

In another embodiment, the processing aid can be a bio-based fatty acid, a fatty acid derivative and/or a blend of bio-based fatty acid derivative(s). Such a blend can have a softening point (Tg) in the range of from 105° C to 120° C. In a contemplated embodiment, the processing aid be obtained as ZB 49 from Struktol^{®} or others. In some embodiments, the processing aid can be used to promote coupling between a coupling agent, silica filler and/or moieties on the polymer to the network between the polymers.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators, accelerators and retarders and processing additives, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts.

Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1 to 6 phr being preferred. Typical amounts of antioxidants comprise 0.5 to 5 phr. Representative antioxidants may be, for example, polymerized trimethyl dihydroquinoline, mixture of aryl-p-phenylene diamines, and others, such as, for example, those disclosed in The Vanderbilt Rubber Handbook (1978), pages 344 through 346. In the preferred embodiment, the antioxidant is a lignin-based antioxidant. Typical amounts of antiozonants comprise 1 to 5 phr. A non-limiting representative antiozonant can be, for example, a lignin-based antioxidant. Although N-(1,3 dimethyl butyl)-n'-phenyl-p-phenylenediamine is also contemplated. Typical amounts of fatty acids, if used, which can include stearic acid as an example, can comprise 0.5 to 5 phr. Typical amounts of zinc oxide comprise 1 to 5 phr. In a preferred embodiment, the zinc oxide is derived from recycled content. Typical amounts of waxes comprise 1 to 5 phr. Often microcrystalline waxes are used, but refined paraffin waxes or combinations of both can be used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.2 to 3, preferably 1 to 2.5 phr. In another embodiment, combinations of a primary and a secondary accelerator might be used with the secondary accelerator being used in total amounts ranging from 0.2 to 3, preferably 1 to 2.5 phr., in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. A nonlimiting example of a retarder can be N-cyclohexylthiophthalimide (CTP). Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide, such as, for example, N-cyclohexyl-2-benzothiazolesulfenamide (CBS), N-tert-buty-benzothiazole-2-sulphenamide (TBBS), or N,N-Dicyclohexyl-2-benzothiazolesulfenamide (DCBS). If a second accelerator is used, the secondary accelerator is preferably a guanidine (such as diphenyl guanidine (DPG)), dithiocarbamate (such as zinc dimethyl di-thiocarbamate or zinc dibenzyl di-thiocarbamate) or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

Vulcanization of a pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The disclosure contemplates a tire component formed from such method. Similarly, the tire component may be incorporated in a tire. The tire component can be ground contacting or non-ground contacting. The tire can be pneumatic or non-pneumatic. In one embodiment, the tire component can be a coating compound, such as a ply coat, wire coat, bead coat or gum strip. The tire component can be an apex, an inline overlay or innerliner or tread base. Generally, as discussed supra, the tire component is non-ground contacting.

The tire of the present disclosure may be a race tire, passenger tire, aircraft tire, agricultural, earthmover, off-the-road, truck (commercial or passenger) tire, and the like. Preferably, the tire is a passenger or truck tire. The tire may also be a radial or bias, with a radial being preferred.

The rubber composition itself, depending largely upon the selection and levels of renewable materials, may also be useful in a tire tread, sidewall, reinforcement, or other tire components, but is also amenable to other applications including rubber tracks, conveyor belts or other industrial product applications, such as windshield wiper blades, brake diaphragms, washers, seals, gaskets, hoses, conveyor belts, power transmission belts, shoe soles, shoe foxing and floor mats for buildings or automotive applications.

The following examples are presented for the purposes of illustrating the present invention. All parts are parts by weight unless specifically identified otherwise.

### EXAMPLES

In these examples, the effects of the disclosed combinations of renewable content on the performance of a rubber compound are illustrated. Rubber compositions were mixed in a multi-step mixing procedure following the recipes in Tables 1-10.

The controls and experimental samples were formed using a single polymer or blends of polybutadiene BR, emulsion polymerized styrene butadiene copolymer ESBR, natural rubber, and synthetic polyisoprene with one or more additive materials including oil (soybean), a carbon black filler, a bio-based resin, a bio-based silane coupling agent, waxes, antiozonant, a lignin-based antioxidant, a blend of bio-based fatty acid derivatives, and a recycled zinc oxide. Standard curing techniques were also used.

Viscoelastic properties (G' and tan delta TD) were measured using an ARES Rotational Rheometer rubber analysis instrument which is an instrument for determining various viscoelastic properties of rubber samples, including their storage modulii (G') over a range of in torsion as measured at 3% strain and a frequency of 10 Hz. Generally, a higher G at 30° C indicates a better handling performance for a tire containing the given compound. A lower G' at -20°C generally indicates improved snow performance of a tire containing the compound. Tan delta is given as measured at 10% strain and a frequency of 10 Hz at 0° C and 30° C. Generally, a lower tan delta at 30° C indicates a lower rolling resistance in a tire containing the given compound, while a higher tan delta at 0° C indicates improved wet traction in a tire containing the given compound.

Cure properties were determined using a Monsanto oscillating disc rheometer (MDR) which was operated at a temperature of 150° C. and at a frequency of 11 hertz. A description of oscillating disc rheometers can be found in The Vanderbilt Rubber Handbook edited by Robert O. Ohm (Norwalk, Conn., R. T. Vanderbilt Company, Inc., 1990), Pages 554 through 557. The use of this cure meter and standardized values read from the curve are specified in ASTM D-2084. A typical cure curve obtained on an oscillating disc rheometer is shown on Page 555 of the 1990 edition of The Vanderbilt Rubber Handbook.

Other viscoelastic properties were determined using a Flexsys Rubber Process Analyzer (RPA) 2000. A description of the RPA 2000, its capability, sample preparation, tests and subtests can be found in these references. H A Pawlowski and J S Dick, Rubber World, June 1992; J S Dick and H A Pawlowski, Rubber World, January 1997; and J S Dick and J A Pawlowski, Rubber & Plastics News, Apr. 26 and May 10, 1993.

Rebound is a measure of hysteresis of the compound when subject to loading, as measured by ASTM D1054. Generally, the higher the measured rebound at 60 and 100° C., the lower the rolling resistance in a tire containing the given compound.

Abrasion was determined as Grosch abrasion rate as run on a LAT-100 Abrader and measured in terms of mg/km of rubber abraded away. The test rubber sample is placed at a slip angle under constant load (Newtons) as it traverses a given distance on a rotating abrasive disk (disk from HB Schleifmittel GmbH). A high abrasion severity test may be run, for example, at a load of 70 newtons, 12° slip angle, disk speed of 20 km/hr for a distance of 250 meters. Grosch abrasion values were not be compared between study sets. Additional abrasion measurements were determined using relative volume loss tested using DIN abrasion relative to a standard according to ASTM D5693 at a load of 10 N.

Tear strength was determined following ASTM D4393 except that a sample width of 2.5 cm is used and a clear Mylar 15 plastic film window of a 5 mm width is inserted between the two test samples. It is an interfacial adhesion measurement (pulling force expressed in N/mm units) between two layers of the same tested compound which have been co-cured together with the Mylar film window therebetween. The purpose of the Mylar film window is to delimit the width of the pealed area.

Adhesion was determined following the Standard Bead Wire Adhesion Test, according to ASTM D1871 Method 1.

Ozone testing was done using the ASTM D1149 procedure using rectangular test specimens (1 inch wide x 3.75 inch length). The rubber samples are clamped into frames and looped until the ends meet. After a conditioning period, specimens are placed in the ozone test chamber set at 40°C and 0.50 PPHM ozone concentration for 48 hours before evaluation.

### EXAMPLE 1

The Control C1 is a conventional bead coat compound. Sample E1 replaces the naphthenic oil with equal parts soybean oil; made a small adjustment to the cure package; replaces conventional zinc oxide with a zinc oxide with recycled content; replaces conventional carbon black from a carbon black derived from plant-based oil; and replaces the conventional silica with equal parts rice husk ash silica, with all other ingredients being the same.

The rubber compounds were then cured and tested for various properties including, inter alia, rebound, stiffness, cure state, and stress/strain (MTE) properties.

The basic formulations are shown in the following Table 1, which is presented in parts per 100 parts by weight of elastomer (phr). Results of the tests are also reported in Table 1, with the results of the Control rubber composition being normalized to values of 100 and the results for the Experimental Sample being related to the normalized value.

**TABLE 1**

| | **Samples Control C1** | **Exp'l E1** |
|---|---|---|
| ESBR | 100 | 0 |
| Mass balance ESBR | 0 | 100 |
| Naphthenic oil | 21 | 0 |
| Soybean oil | 0 | 21 |
| Conventional silica | 7 | 0 |
| Rice husk ash silica | 0 | 7 |
| Conventional carbon black | 115 | 0 |
| Carbon black from plant-based oil | 0 | 115 |
| Conventional ZnO | 4.5 | 0 |
| Recycled ZnO | 0 | 4.5 |
| Cure Package | | Increase |

| **Viscosity** | | |
|---|---|---|
| RPA at 0.83 Hz, 100° C | | |
| G' 15% (MPa) | 100 | 106 |

| **Cure State** | | |
|---|---|---|
| Delta Torque (dNm) | 100 | 102 |
| T90 (min) | 100 | 83 |

| **Stiffness** | | |
|---|---|---|
| RPA G' 1% (MPa) | 100 | 97 |
| RPA G' 50% (MPa) | 100 | 110 |

| **MTE Properties** | | |
|---|---|---|
| 100% Modulus (MPa) | 100 | 105 |
| Tensile strength (MPa) | 100 | 95 |
| Elongation at break (%) | 100 | 81 |

| **Hardness** | | |
|---|---|---|
| Shore A 3S at 23° C | 100 | 100 |
| Shore A 3S at 100° C | 100 | 100 |
| **Adhesion** | | |
| SBAT Adhesion max force (N) | 100 | 89 |

| **Rebound** | | |
|---|---|---|
| 23° C (%) | 100 | 102 |
| 100° C (%) | 100 | 107 |

A tire of the disclosed invention can employ a bead having a bead coating (or bead filler) rubber composition comprising 100 phr of a mass-balanced styrene butadiene rubber and from 5 phr to 30 phr of vegetable oil such as soybean oil and up to 20 phr of rice ash husk silica in the present embodiment. Moreover, a bead rubber composition may further comprise a plant-oil based carbon black, and curatives and vulcanization accelerators such as a recycled zinc oxide.

### EXAMPLE 2

Experimental Sample E2 is shown in Table 2. The Control C2 is a conventional apex compound. Sample E2 is a full natural rubber compound that replaces the naphthenic oil with soybean oil and increases the cure package. Sample E2 adjusted levels of resin and carbon black to improve reinforcement. Sample E2 uses recycled zinc oxide in place of conventional zinc oxide, with all other ingredients being the same.

The rubber compounds were then cured and tested for various properties including, inter alia, rebound, stiffness, cure state, and stress/strain (MTE) properties.

The basic formulations are shown in the following Table 2, which is presented in parts per 100 parts by weight of elastomer (phr). Results of the tests are also reported in Table 2, with the results of the Control rubber composition being normalized to values of 100 and the results for the Experimental Sample being related to the normalized value.

**TABLE 2**

| | **Samples Control C2** | **Experimental E2** |
|---|---|---|
| Natural rubber | 0 | 100 |
| Synthetic polyisoprene | 60 | 0 |
| ESBR | 40 | 0 |
| Conventional carbon blacks | 92 | 0 |
| Carbon black derived from plant-based oil | 0 | 95 |
| Naphthenic oil | 6.5 | 0 |
| Soybean oil | 0 | 9 |
| Resin¹ | 3 | 7.50 |
| Conventional ZnO | 3 | 0 |
| Recycled ZnO | 0 | 5 |
| Cure package | | Increase |

| **Viscosity** | | |
|---|---|---|
| RPA at 0.83 Hz, 100° C | | |
| G', 15% (MPa) | 100 | 112 |

| **Cure State** | | |
|---|---|---|
| Delta Torque (dNm) | 100 | 109 |
| T90 (min) | 100 | 91 |

| **Stiffness** | | |
|---|---|---|
| | **Samples Control C2** | **Experimental E2** |
| RPA G' 1% (MPa) | 100 | 124 |
| RPA G' 15% (MPa) | 100 | 107 |

| **MTE Properties** | | |
|---|---|---|
| 100% Modulus (MPa) | 100 | 140 |
| Tensile strength (MPa) | 100 | 114 |
| Elongation at break (%) | 100 | 82 |
| Tear 100° C (N) | 100 | 81 |

| **Rebound** | | |
|---|---|---|
| Rebound at 23° C (%) | 100 | 104 |
| Rebound at 100° C (%) | 100 | 98 |

| **Shore A Hardness** | | |
|---|---|---|
| at 23° C (%) | 100 | 102 |
| at 100° C (%) | 100 | 103 |

| | | |
|---|---|---|
| Phenol formaldehyde reactive type resin | | |

The apexes of the disclosed tire can employ an apex rubber composition comprising 100 phr of natural rubber and a vegetable oil (such as soybean or rapeseed oil) within a range of 1 phr to 15 phr. Moreover, the composition comprises a phenol formaldehyde reactive type resin within a range of 5 phr to 20 phr, a carbon black derived from plant-based oil within the range of 80 and 100 phr, and recycled zinc oxide in the range of 2 to 7 phr.

### EXAMPLE 3

Experimental Sample E3 is shown in Table 3. The Control C3 is a conventional tread base compound. Sample E3 replaces the conventional polybutadiene with a mass balanced polybutadiene. Sample E3 also replaces naphthenic oil with equal parts soybean oil; makes small adjustments to the cure package; replaces a conventional antioxidant with an antioxidant derived from lignin; replaces conventional zinc oxide with zinc oxide with recycled content; and replaces the conventional carbon black with a carbon black derived from ELT pyrolysis oil, with all other ingredients being the same as C3
The rubber compounds were then cured and tested for various properties including, inter alia, rebound, stiffness, cure state, and stress/strain (MTE) properties.

The basic formulations are shown in the following Table 3, which is presented in parts per 100 parts by weight of elastomer (phr). Results of the tests are also reported in Table 3, with the results of the Control rubber composition being normalized to values of 100 and the results for the Experimental Sample being related to the normalized value.

**TABLE 3**

| | **Samples Control C3** | **Experimental E3** |
|---|---|---|
| Polybutadiene | 35 | 0 |
| Mass balance BR | 0 | 35 |
| Natural rubber | 65 | 65 |
| Conventional carbon black | 42 | 0 |
| Carbon black from ELT pyrolysis oil | 0 | 47 |
| Naphthenic oil | 6 | 0 |
| Soybean oil | 0 | 6 |
| Conventional antioxidant | 1 | 0 |
| Lignin based antioxidant | 0 | 1 |
| Conventional ZnO | 2.5 | 0 |
| Recycled ZnO | 0 | 2.5 |
| Cure package | | Increase |

| **Viscosity** | | |
|---|---|---|
| RPA at 0.83 Hz, 100° C | | |
| G', 15% (MPa) | 100 | 108 |
| **Cure State** | | |
| Delta Torque (dNm) | 100 | 104 |
| T90 (min) | 100 | 80 |

| **Stiffness** | | |
|---|---|---|
| RPA G', 1% (MPa) | 100 | 103 |
| RPA G' 50% (MPa) | 100 | 107 |

| **MTE Properties** | | |
|---|---|---|
| 300% Modulus (MPa) | 100 | 108 |
| Tensile strength (MPa) | 100 | 97 |
| Elongation at break (%) | 100 | 95 |
| Tear 100° C(N) | 100 | 61 |

| **RR Indicator** | | |
|---|---|---|
| Rebound at 100° C | 100 | 104 |

| **Abrasion** | | |
|---|---|---|
| DIN abrasion relative volume loss | 100 | 120 |

| **Shore A Hardness** | | |
|---|---|---|
| 23° C, 3S | 100 | 100 |

The tread base of the disclosed tire can employ a tread base rubber composition comprising of a mass balance BR between 25 and 45 phr with the remainder of the polymer matrix comprising of natural rubber. Moreover, the composition comprises of a carbon black derived from ELT pyrolysis oil between 40 and 50 phr; a biobased oil (such as soybean or rapeseed oil) within the range of 2 and 10 phr; a lignin-based antioxidant between the range of 0.1 and 2 phr; and a recycled zinc oxide between 1.5 and 3.5 phr.

### EXAMPLE 4

Experimental Sample E4 is shown in Table 4. The Control C4 is a conventional wire coat compound. Sample E4 replaces the naphthenic oil with equal parts soybean oil; and replaces the synthetic polyisoprene with equal parts natural rubber. Moreover, conventional silica and carbon black fillers were replaced with silica from rice husk ash and carbon black derived from plant-based oil. The conventional antioxidant and zinc oxide were replaced with sustainably sourced versions, with all other ingredients being the same as Sample E4.

The rubber compounds were then cured and tested for various properties including, inter alia, rebound, stiffness, cure state, and stress/strain (MTE) properties.

The basic formulations are shown in the following Table 4, which is presented in parts per 100 parts by weight of elastomer (phr). Results of the tests are also reported in Table 4, with the results of the Control rubber composition being normalized to values of 100 and the results for the Experimental Sample being related to the normalized value.

**TABLE 4**

| | **Samples Control C4** | **Experimental E4** |
|---|---|---|
| Synthetic Polyisoprene | 50 | 0 |
| Natural Rubber | 50 | 100 |
| Conventional silica | 4 | 0 |
| Rice husk ash silica | 0 | 4 |
| Conventional carbon black | 57 | 0 |
| Carbon black from plant-based oil | 0 | 57 |
| Conventional antioxidant | 1 | 0 |
| Lignin based antioxidant | 0 | 1 |
| Conventional ZnO | 8 | 0 |
| Recycled ZnO | 0 | 8 |
| Naphthenic oil | 2 | 0 |
| Soybean oil | 0 | 2 |

| **Viscosity** | | |
|---|---|---|
| RPA at 0.83 Hz, 100° C | | |
| G' 15% (MPa) | 100 | 108 |

| **Cure State** | | |
|---|---|---|
| Delta Torque (dNm) | 100 | 104 |
| T90 (min) | 100 | 80 |

| **Stiffness** | | |
|---|---|---|
| RPA G', 1% (MPa) | 100 | 103 |

| | **Samples Control C4** | **Experimental E4** |
|---|---|---|
| RPA G' 50% (MPa) | 100 | 107 |

| **MTE Properties** | | |
|---|---|---|
| 300% Modulus (MPa) | 100 | 108 |
| Tensile strength (MPa) | 100 | 97 |
| Elongation at break (%) | 100 | 95 |
| Tear 100° C (N) | 100 | 61 |

| **Rebound** | | |
|---|---|---|
| 23° C (%) | 100 | 104 |
| 100° C (%) | 100 | 104 |

The wirecoat of the disclosed tire can employ a rubber composition comprising of a natural rubber polymer matrix. Moreover, the composition comprises a filler system of a carbon black derived from plant-based oil between 40 and 70 phr and silica derived from rice husk ash at a level between 2 and 8 phr; a biobased oil (such as soybean or rapeseed oil) within the range of 0 and 5 phr; a lignin-based antioxidant between the range of 0.1 and 2 phr; and a recycled zinc oxide between 3 and 10 phr.

### EXAMPLE 5

Experimental Sample E5 is shown in Tables 5A and 5B. The Control C5 is a conventional gum strip compound. Sample E5 replaces the synthetic rubber content with equal parts viscosity-controlled natural rubber; replaces the conventional silica with equal parts rice ash husk silica; replaces conventional carbon black with carbon black derived from plant-based oil; replaces the naphthenic oil with soybean oil; replaces the conventional zinc oxide and antioxidant with a recycled zinc oxide and a lignin-based antioxidant; and increases the cure package, with all other parts being equal to Control C5.

The rubber compounds were then cured and tested for various properties including, inter alia, stiffness.

The basic formulations are shown in the following Table 5, which is presented in parts per 100 parts by weight of elastomer (phr). Results of the tests are also reported in Table 5, with the results of the Control rubber composition being normalized to values of 100 and the results for the Experimental Sample being related to the normalized value.

**TABLE 5**

| | **Samples** | | |
|---|---|---|---|
| | **Control** | **Experimental** | |
| | | **C5** | **E5** |
| Synthetic polyisoprene | | 49 | 0 |
| Natural rubber A¹ | | 51 | 0 |
| Natural rubber B² | | 0 | 100 |
| Naphthenic oil | | 4 | 0 |
| Soybean oil | | 0 | 4 |
| Conventional carbon black | | 63 | 0 |
| Carbon black derived from plant-based oil | | 0 | 63 |
| Conventional silica | | 5 | 0 |
| Rice husk ash silica | | 0 | 5 |
| Conventional antioxidant | | 1 | 0 |
| Lignin based antioxidant | | 0 | 1 |
| Conventional ZnO | | 8 | 0 |
| Recycled ZnO | | 0 | 8 |
| Cure package | | | Increase |

| **Viscosity,** RPA at 0.83 Hz, | | | |
|---|---|---|---|
| 100° C | | | |
| G', 15% (MPa) | | 100 | 85 |

| Cure **State** | | | |
|---|---|---|---|
| Delta Torque (dNm) | | 100 | 97 |
| T90 (min) | | 100 | 82 |

| **Stiffness** | | | |
|---|---|---|---|
| RPA G', 1% (MPa) | | 100 | 81 |
| RPA G', 50% (MPa) | | 100 | 87 |

| **MTE Properties** | | | |
|---|---|---|---|
| 300% Modulus (MPa) | | 100 | 106 |
| Tensile strength (MPa) | | 100 | 105 |
| Elongation at break (%) | | 100 | 98 |
| DeMattia Pierced Rate | | 100 | 98 |
| (min/nm) | | | |

| **Rebound** | | | |
|---|---|---|---|
| 23° C (%) | | 100 | 105 |
| 100° C (%) | | 100 | 107 |

| | | | |
|---|---|---|---|
| ¹ TSR 10 Natural rubber ² TSR5-CV Natural rubber | | | |

The gumstrip of the disclosed tire can employ a rubber composition comprising of a natural rubber polymer matrix. Moreover, the composition comprises a filler system of a carbon black derived from plant-based oil between 50 and 75 phr and silica derived from rice husk ash at a level between 2 and 10 phr; a biobased oil (such as soybean or rapeseed oil) within the range of 0 and 6 phr; a lignin-based antioxidant between the range of 0.1 and 2 phr; and a recycled zinc oxide between 5 and 12 phr.

### EXAMPLE 6

Experimental Samples E6 is shown in Table 6. The Control C6 is a conventional inline overlay compound. Sample E6 slightly adjusts the polymer levels, while replacing ESBR with a mass balance SBR; replaces the naphthenic oil of Control C6 with soybean oil; replaces the filler system of conventional silica and carbon black with silica derived from rice husk ash and carbon black derived from plant-oil; replaces the conventional zinc oxide and antioxidant with a recycled zinc oxide and a lignin-based antioxidant; and adjusts the cure package, with all other ingredients being the same.

The rubber compounds were then cured and tested for various properties including, inter alia, rebound, stiffness, cure state, and MTE properties.

The basic formulations are shown in the following Table 6, which is presented in parts per 100 parts by weight of elastomer (phr). Results of the tests are also reported in Table 6, with the results of the Control rubber composition being normalized to values of 100 and the results for the Experimental Sample being related to the normalized value.

**TABLE 6**

| | **Samples Reference** | **Experimental C6** | **E6** |
|---|---|---|---|
| Natural rubber | | 80 | 85 |
| ESBR | | 20 | 0 |
| Mass balanced SBR | | 0 | 15 |
| Conventional silica | | 3 | 0 |
| Rice husk ash silica | | 0 | 3 |
| Conventional carbon black | | 46 | 0 |
| Carbon black from plant-based oil | | 0 | 46 |
| Conventional antioxidant | | 1 | 0 |
| Lignin based antioxidant | | 0 | 1 |
| Conventional ZnO | | 5 | 0 |
| Recycled ZnO | | 0 | 5 |
| Naphthenic oil | | 6.5 | 0 |
| Soybean oil | | 0 | 6.5 |
| Cure package | | | Increase |
| **Viscosity,** RPA at 0.83 Hz, 100° C | | | |
| G', 15% (MPa) | | 100 | 105 |
| **Cure State** | | | |
| Delta Torque (dNm) | | 100 | 84 |
| T90 (min) | | 100 | 71 |
| **Stiffness** | | | |
| RPA G', 1% (MPa) | | 100 | 88 |
| RPA G' 50% (MPa) | | 100 | 94 |
| **MTE Properties** | | | |
| 300% Modulus (MPa) | | 100 | 100 |
| Tensile strength (MPa) | | 100 | 91 |
| Elongation at break (%) | | 100 | 92 |
| Tear 100° C (N) | | 100 | 84 |
| **Rebound** | | | |
| 100° C (%) | | 100 | 105 |

The overlay of the disclosed tire can employ a rubber composition comprising of a blend of natural rubber and mass balance SBR. Moreover, the composition comprises a filler system of a carbon black derived from plant-based oil between 35 and 50 phr and silica derived from rice husk ash at a level between 1 and 8 phr; a biobased oil (such as soybean or rapeseed oil) within the range of 2 and 10 phr; a lignin-based antioxidant between the range of 0.1 and 2 phr; and a recycled zinc oxide between 1 and 8 phr.

### EXAMPLE 7

Experimental Samples E7 is shown in Table 7. The Control C7 is a conventional plycoat compound. Sample E7 is comprised of a mass balance SBR/natural rubber blend. Sample E7 replaces the naphthenic oil of Control C7 with soybean oil; replaces the conventional carbon black with a higher level of carbon black derived from ELT pyrolysis oil; increases the cure package; replaces the conventional silica with rice ash husk silica; and replaces the conventional zinc oxide and antioxidant with a recycled zinc oxide and lignin-based antioxidant, with all other ingredients being the same.

The rubber compounds were then cured and tested for various properties including, inter alia, stiffness.

The basic formulations are shown in the following Table 7, which is presented in parts per 100 parts by weight of elastomer (phr). Results of the tests are also reported in Table 7, with the results of the Control rubber composition being normalized to values of 100 and the results for the Experimental Sample being related to the normalized value.

**TABLE 7**

| | **Samples Control C7** | **Experimental E7** |
|---|---|---|
| Natural rubber | 80 | 80 |
| ESBR | 20 | 0 |
| Mass balance SBR | 0 | 20 |
| Conventional carbon black | 35 | 0 |
| Carbon black from ELT pyrolysis oil | 0 | 39 |
| Naphthenic oil | 7 | 0 |
| Soybean oil | 0 | 7 |
| Conventional silica | 3 | 0 |
| Rice husk ash silica | 0 | 3 |
| Conventional antioxidant | 1 | 0 |
| Lignin based antioxidant | 0 | 1 |
| Conventional ZnO | 2 | 0 |
| Recycled ZnO | 0 | 2 |
| Cure package | | increase |
| **Viscosity** | | |
| RPA at 0.83 Hz, 100° C | | |
| G', 15% (MPa) | 100 | 112 |
| **Cure State** | | |
| Delta Torque (dNm) | 100 | 110 |
| T90 (min) | 100 | 77 |
| **Stiffness** | | |
| RPA G', 1% (MPa) | 100 | 97 |
| RPA G' 50% (MPa) | 100 | 112 |
| **MTE Properties** | | |
| 300% Modulus (MPa) | 100 | 113 |
| Tensile strength (MPa) | 100 | 101 |
| Elongation at break (%) | 100 | 95 |
| Tear 100° C (N) | 100 | 68 |
| **Rebound** | | |
| 100° C (%) | 100 | 107 |

The plycoat of the disclosed tire can employ a rubber composition comprising of a blend of natural rubber and mass balance SBR. Moreover, the composition comprises a filler system of a carbon black derived from plant-based oil between 30 and 50 phr and silica derived from rice husk ash at a level between 1 and 5 phr; a biobased oil (such as soybean or rapeseed oil) within the range of 3 and 10 phr; a lignin-based antioxidant between the range of 0.1 and 2 phr; and a recycled zinc oxide between 1 and 4 phr.

### EXAMPLE 8

Experimental Sample E8 is shown in Tables 8. The Controls C8 is for a conventional sidewall compound. Polymer levels were adjusted in experimental Sample E8 to increase natural rubber content; the conventional polybutadiene was replaced with a mass balance BR. Sample E8 further replaces the naphthenic oil of Controls C8 with soybean oil and increases the cure package. It also replaces the petroleum derived hydrocarbon for a bio-based resin, the conventional zinc oxide with a recycled zinc oxide, and the conventional carbon black with sustainably derived carbon blacks. All other ingredients remain the same as Control C8.

The rubber compounds were then cured and tested for various properties including, inter alia, stiffness, weathering, tear and MTE, and rolling resistance properties.

The basic formulations are shown in the following Table 8, which is presented in parts per 100 parts by weight of elastomer (phr). Results of the tests are also reported in Table 8, with the results of the Control rubber composition being normalized to values of 100 and the results for the Experimental Sample being related to the normalized value.

**TABLE 8**

| | **Samples Control C8** | **Experimental** E8 |
|---|---|---|
| Polybutadiene | 65 | 0 |
| Mass balance BR | 0 | 50 |
| Natural Rubber | 35 | 50 |
| Naphthenic oil | 15 | 0 |
| Soybean oil | 0 | 15 |
| Conventional carbon black | 51 | 0 |
| Sustainably sourced carbon black A¹ | 0 | 40 |
| Sustainably sourced carbon black B² | 0 | 15 |
| Resin A³ | 3.5 | 0 |
| Resin B⁴ | 0 | 3.5 |
| Conventional ZnO | 2 | 0 |
| Recycled ZnO | 0 | 2 |
| AO/AOz Package | 6.25 | 6.25 |
| Cure package | | Increase |
| **Viscosity** | | |
| RPA at 0.83 Hz, 100° C | | |
| G' 15% (MPa) | 100 | 89 |
| **Cure State** | | |
| Delta Torque (dNm) | 100 | 84 |
| T90 (min) | 100 | 123 |
| Stiffness | | |
| RPA G', 1% (MPa) | 100 | 81 |
| RPA G', 50% (MPa) | 100 | 79 |
| **MTE Properties** | | |
| 300% Modulus (MPa) | 100 | 83 |
| Tensile strength (MPa) | 100 | 106 |
| Elongation at break (%) | 100 | 108 |
| Tear 100° C (N) | 100 | 93 |
| **Rebound** | | |
| 100° C Rebound (%) | 100 | 112 |

| | | |
|---|---|---|
| ¹ Carbon black derived from ELT pyrolysis oil ² Carbon black derived from methane pyrolysis ³ Phenol formaldehyde resin | | |

### Bio-based gum resin

A tire of the disclosed invention may employ sidewalls formed from a sidewall rubber composition comprising in a non-limiting example from 25 phr to 75 phr of a mass-balanced polybutadiene. Moreover, the sidewall rubber composition comprises from 25 phr to 75 phr of natural rubber. As a filler, the sidewall rubber composition comprises from 10 phr to 20 phr of a methane pyrolysis-based carbon black and from 20 phr to 60 phr carbon black from ELT pyrolysis oil. In addition, the rubber composition may comprise from 10 phr to 20 phr of a vegetable triglyceride oil such as soybean oil, from 1 to 3 phr of recycled zinc oxide, and from 2 phr to 7 phr of a bio-based gum resin.

### EXAMPLE 9

Experimental Sample E9 is shown in Table 9. The Control C9 is for a conventional inner liner compound. Sample E9 replaces conventional carbon black with a carbon black derived from methane pyrolysis, the naphthenic oil of Control C9 with soybean oil, the conventional ZnO with a recycled ZnO, and further increases the cure package, with all other ingredients being the same.

The rubber compounds were then cured and tested for various properties including, inter alia, stress and tear (MTE).

The basic formulations are shown in the following Table 9, which is presented in parts per 100 parts by weight of elastomer (phr). Results of the tests are also reported in Table 9, with the results of the Control rubber composition being normalized to values of 100 and the results for the Experimental Sample being related to the normalized value.

**TABLE 9**

| | **Samples Control C9** | **Experimental E9** |
|---|---|---|
| Conventional carbon black | 70 | 0 |
| Carbon black from methane pyrolysis | 0 | 70 |
| Naphthenic oil | 6 | 0 |
| Soybean oil | 0 | 6 |
| Conventional ZnO | 1 | 0 |
| Recycled ZnO | 0 | 1 |
| Cure package | | increase |
| **Viscosity** | | |
| RPA at 0.83 Hz, 100° C | | |
| G', 15% (MPa) | 100 | 100 |
| **Cure State** | | |
| Delta Torque (dNm) | 100 | 61 |
| T90 (min) | 100 | 70 |
| **Stiffness** | | |
| RPA G' 1% (MPa) | 100 | 68 |
| RPA G' 50% (MPa) | 100 | 71 |
| **MTE Properties** | | |
| 300% Modulus (MPa) | 100 | 45 |
| Tensile strength (MPa) | 100 | 69 |
| Elongation at break (%) | 100 | 114 |
| Tear 100° C (N) | 100 | 81 |
| **Rebound** | | |
| Rebound at 23° C (%) | 100 | 93 |
| Rebound at 100° C (%) | 100 | 95 |
| **Air Permeability** | | |
| MOCON Oxygen Diffusion Permeation* (cm³-mm)/(m²-d) | 100 | 58 |

The inner liner of the disclosed invention may, in one embodiment, be formed from an inner liner rubber composition comprising of 0 phr to 10 phr of reclaimed butyl rubber. Moreover, this rubber composition comprises from 2phr to 10 phr of a vegetable oil, such as soybean or rapeseed oil, and may include other bio-based ingredients such as 1 phr to 5 phr of (bio-based) fatty acid, recycled ZnO from 0.1 to 2 phr, or bio-derived carbon black in an amount of between 1 phr to 200 phr.

### EXAMPLE 10

Experimental Samples E10 and E11 are shown in Table 10. The Control C10 is for a conventional chafer/toeguard compound. Samples E10 and E11 have similar formulations, but E10 was used as the chafer, while E11 was used as the toeguard. Samples E10/E11 replaces the naphthenic oil of Control C10 with soybean oil, and further increases the cure package. Samples E10/E11 also replaces the petroleum derived hydrocarbon resin for a bio-based resin, the conventional carbon black with sustainably sourced carbon blacks, and the conventional ZnO with recycled ZnO. It also adjusts the polymer levels to comprise a greater amount natural rubber, replacing the conventional polybutadiene and SBR with mass balance versions, with all other ingredients being the same as C10.

The rubber compounds were then cured and tested for various properties including, inter alia, cure, tear.

The basic formulations are shown in the following Table 10, which is presented in parts per 100 parts by weight of elastomer (phr). Results of the tests are also reported in Table 10, with the results of the Control rubber composition being normalized to values of 100 and the results for the Experimental Sample being related to the normalized value.

**TABLE 10**

| | **Samples Reference** | **C10** | **Experimental E10** | **E11** |
|---|---|---|---|---|
| Polybutadiene | | 45 | 0 | 0 |
| Mass balance BR | | 0 | 30 | 30 |
| ESBR | | 30 | 0 | 0 |
| Mass balance SBR | | 0 | 30 | 30 |
| Synthetic polyisoprene | | 25 | 0 | 0 |
| Natural rubber | | 0 | 40 | 40 |
| Conventional carbon black | | 81 | 0 | 0 |
| Carbon black from plant-based oil | | 0 | 61 | 61 |
| Carbon black from ELT pyrolysis oil | | 0 | 22 | 22 |
| Naphthenic oil | | 16 | 0 | 0 |
| Soybean oil | | 0 | 16 | 16 |
| Conventional ZnO | | 2 | 0 | 0 |
| Recycled ZnO | | 0 | 3 | 3 |
| Resin A¹ | | 2 | 0 | 0 |
| Resin B² | | 0 | 3 | 3 |
| Cure package | | | increase | increase |
| **Viscosity** | | | | |
| RPA at 0.83 Hz, 100° C | | | | |
| G', 15% (MPa) | | 100 | 102 | 95 |
| **Cure State** | | | | |
| Delta Torque (dNm) | | 100 | 100 | 93 |
| T90 (min) | | 100 | 91 | 105 |
| **Stiffness** | | | | |
| RPA G', 1% (MPa) | | 100 | 94 | 85 |
| RPA G' 50% (MPa) | | 100 | 82 | 95 |
| **MTE Properties** | | | | |
| 300% Modulus (MPa) | | 100 | 103 | 103 |
| Tensile strength (MPa) | | 100 | 102 | 93 |
| Elongation at break (%) | | 100 | 103 | 97 |
| Tear SS Ave Load 100° C | | 100 | 110 | 92 |
| **RR Indicator** | | | | |
| Rebound at 23° C | | 100 | 108 | 110 |
| Rebound at 100° C | | 100 | 104 | 107 |
| **Compression Set** | | | | |
| % set, 22h hrs, 70° C | | 100 | 54 | 100 |

| | | | | |
|---|---|---|---|---|
| ¹ Phenol formaldehyde resin ² Tall oil resin | | | | |

The tire of the disclosed invention can employ a toeguard/chafer formed from a chafer rubber composition comprising from 20 phr to 40 phr of mass-balanced polybutadiene rubber, from 20 phr to 80 phr of natural rubber, and optionally up to 40 phr of ESBR. Moreover, the rubber composition may further comprise optionally from 1 phr to 20 phr of a vegetable oil, 15 to 100 phr carbon black sourced from sustainably derived feedstocks, recycled ZnO from 1 to 5 phr, and from 0.1 phr to 5 phr of resin.

While not shown herein, further tire components such as base tread(s), chimney(s), wedge, cushions or rubber strips may also be present and may have also rubber compositions comprising one or more of the recycled and/or bio-based ingredients disclosed herein. In general, specific examples of materials mentioned in one embodiment can also be used as materials in another embodiment disclosed herein.

### EXAMPLE 11

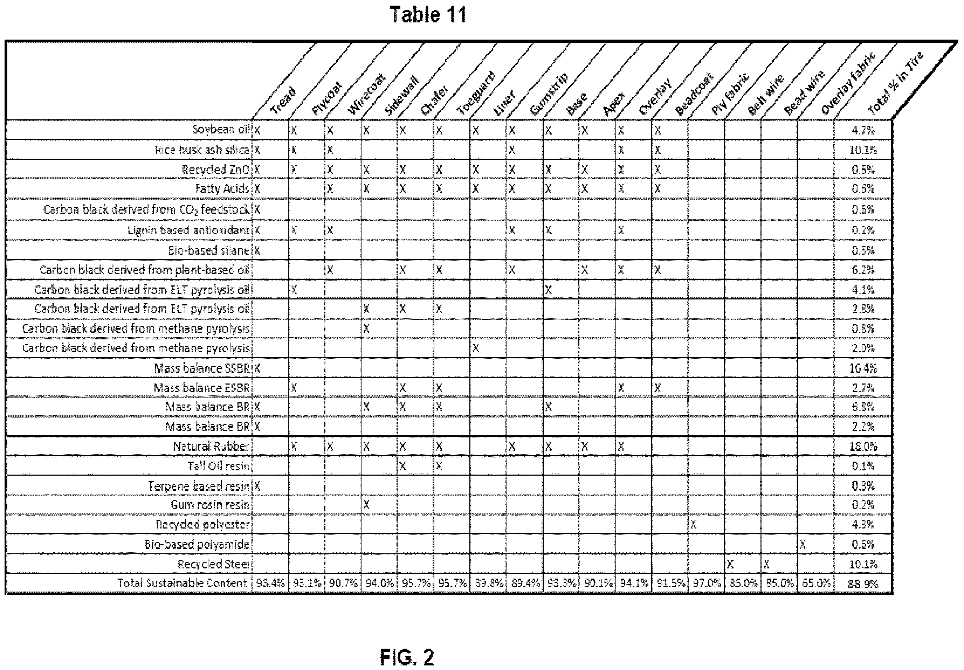

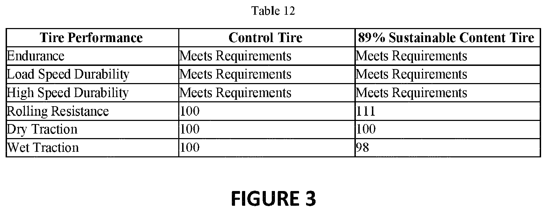

Example 11 is shown in FIGURES 2 and 3. FIGURE 2 shows a summary of the combination of compounds outlined in examples 1 through 10 to form a tire with competitive performance. Example 11 includes the reinforcement materials, including polyamide, steel, and polyester. The breakdown of sustainable materials within each component is described in Table 11. The components range in sustainable content from 39.8% to 97% by weight.

The performance of the aforementioned tire was tested. FIGURE 3 reports the tire results for endurance, high speed durability, load speed durability, rolling resistance, and trailer traction. The results of the conventional tire are normalized to values of 100 and the results for Example 11 are related to the normalized value.

The tire with 89% by weight sustainable content matched or outperformed the control tire in all performance criteria, within testing variation. A significant improvement in rolling resistance performance was achieved with the incorporation of sustainable materials, as described in Examples 1 through 10.

## Claims

1. A sustainable tire comprising at least two tire parts selected from a group consisting of:
at least one liner (24) providing greater than or equal to 2.0% of the overall sustainable material content in the tire (10);
at least one belt wire providing greater than or equal to 5.0% of the overall sustainable material content in the tire;
at least one bead wire providing greater than or equal to 4.5% of the overall sustainable material content in the tire;
at least one gum strip (34) providing greater than or equal to 1.0% of the overall sustainable material content in the tire;
at least one wire coat (36) providing greater than or equal to 5.5% of the overall sustainable material content in the tire;
at least one apex (26) providing greater than or equal to 2.0% of the overall sustainable material content in the tire;
at least one bead coat providing greater than or equal to 0.3% of the overall sustainable material content in the tire;
at least one tread base (14) providing greater than or equal to 4.0% of the overall sustainable material content in the tire;
at least one plycoat providing greater than or equal to 10.0% of the overall sustainable material content in the tire;
at least one tread (12, 14) providing greater than or equal to 28.0% of the overall sustainable material content in the tire;
at least one sidewall (22) providing greater than or equal to 9.0% of the overall sustainable material content in the tire;
at least one overlay (20) providing greater than or equal to 1.75% of the overall sustainable material content in the tire;
at least one toeguard providing greater than or equal to 3.0% of the overall sustainable material content in the tire;
at least one chafer (28) providing greater than or equal to 3.25% of the overall sustainable material content in the tire;
at least one polyester providing greater than or equal to 4.0% of the overall sustainable material content in the tire;
at least one polyamide providing greater than or equal to 0.6% of the overall sustainable material content in the tire; and a combination of the above;
wherein the tire (10) is formed from greater than 85% content made from processes or technologies that reduce carbon emissions and/or resource consumption, and/or wherein the tire (10) is formed from greater than 85% content from recycled, renewable, bio-based, bio-derived, or mass balance raw materials.

2. The tire of claim 1, wherein each tire component is formed from or coated with a rubber composition comprising at least one material selected from a group consisting of: natural rubbers or mass-balanced diene-based polymers; fatty acids; bio-based resins such as terpene and/or rosin-based resins; bio-based coupling agents and/or systems; vegetable triglyceride oil; fillers including carbon black derived from bio-derived, bio-recycled, recycled (circular) feedstocks, or produced from technologies that reduce carbon emissions/conserve resources and/or rice husk ash silica; recycled materials such as zinc oxide, steel and/or polyester; and lignin-based antiozonant or antioxidant.

3. The tire of claim 1 or 2 further comprising at least one reinforcement having greater than or equal to 65 percent by weight recycled and/or renewable content.

4. The tire of at least one of the previous claims, wherein
the liner (24) is **characterized by** greater than or equal to 35 percent by weight sustainable material content;
the belt wire being **characterized by** greater than or equal to 85 percent by weight sustainable material content;
the bead wire being **characterized by** greater than or equal to 85 percent by weight sustainable material content;
the gum strip (34) being **characterized by** greater than or equal to 89 percent by weight sustainable material content;
the wire coat (36) **characterized by** greater than or equal to 90 percent by weight sustainable material content;
the apex (26) being **characterized by** greater than or equal to 90 percent by weight sustainable material content;
the bead coat being **characterized by** greater than or equal to 91 percent by weight sustainable material content;
the tread base (14) being **characterized by** greater than or equal to 93 percent by weight sustainable material content;
the plycoat being **characterized by** greater than or equal to 93 percent by weight sustainable material content;
the tread (12, 14) being **characterized by** greaterthan or equal to 93 percent by weight sustainable material content;
the sidewall (22) being **characterized by** greater than or equal to 93 percent by weight sustainable material content;
the overlay (20) being **characterized by** greater than or equal to 94 percent by weight sustainable material content;
the toeguard being **characterized by** greater than or equal to 95 percent by weight sustainable material content;
the chafer (28) being **characterized by** greater than or equal to 95 percent by weight sustainable material content; and
the PET being **characterized by** greater than or equal to 97 percent by weight sustainable material content.

5. A tire formed from a first rubber compound and a second rubber compound, each of the first and second rubber compound being independently incorporated in a non-ground contacting tire component, each of the first and second rubber compounds comprising, based on 100 phr of rubber polymer:
at least one rubber polymer selected from a group consisting of mass balanced SBR; natural rubber; mass balanced polybutadiene; and mass balanced synthetic polyisoprene;
a bio-based oil;
an optional filler comprising sustainable carbon black or rice ash husk silica;
wherein a total percent of renewable content in the first and second rubber compounds is greater than 80%.

6. The tire of claim 5 wherein a total percent of renewable content in the first and second rubber compounds is greater than 85% or greater than 89%.

7. The tire of claim 5 or 6 wherein the tire is pneumatic tire.

8. The pneumatic tire of at least one of the claims 5 to 7, wherein the non-ground contacting tire components are selected from the group comprising: bead coat; apex; tread base; wire coat; gum strip; inline overlay; plycoat; sidewall; inner liner; and chafer or toe guard.
